# EUROPEAN PATENT SPECIFICATION

(11) **EP 4 432 324 B1**
(45) Date of publication and mention of the grant of the patent: **09.07.2025**
(21) Application number: 24162508.6
(22) Date of filing: 08.03.2024
(51) Int. Cl.: H01H 31/00

(54) **SWITCHGEAR ARCHITECTURE**
SCHALTANLAGENARCHITEKTUR
ARCHITECTURE D'APPAREILLAGE DE COMMUTATION

(30) Priority: 14.03.2023 IN 202311016936; 02.05.2023 GB 202306483
(43) Date of publication of application: 18.09.2024
(73) Proprietor: Eaton Intelligent Power Limited, Dublin 4 (IE)
(72) Inventor: KONA, Kaushik, Pune (IN); SOLASE, Rushikesh, Sangola (IN); PINGLE, Mangesh, Pune (IN); PAWAR, Vishal, Pune (IN); WAGHMORE, Minal, Ichalkaranji (IN)
(74) Representative: Seymour-Pierce, Alexandra Isobel

(56) References cited:
- WO-A2-2006/089644
- US-A1- 2013 292 358
- US-B2- 9 425 006
- US-B2- 9 466 955

## Description

### Field

The present application relates to switchgear architecture. In particular, the present application relates to a multi-pole, multi-way switchgear having respective poles of each switching device of the switchgear arranged in a depth-wise orientation.

### Background

Switchgears are switching mechanisms used to control and protect electrical equipment, such as equipment operated by utilities, commercial building owners, and operators of distributed renewable generation assets such as solar farms and wind turbines. Such switchgears include various medium voltage devices (e.g., devices rated for 12kV or 24kV) for a range of applications, such as a ring main unit (RMU).

For any given equipment specification or application, it is desirable to provide a reliable and compact switchgear with a small footprint. It is also desirable to provide a earthing disconnection switch (or disconnector and earthing switch) with three positions - on, off (or isolation), and earth - to facilitate in-situ testing of cable integrity and improve the ease of maintenance of the switchgear. It is particularly desirable to combine a three-position disconnector and earthing switch with a compact switchgear.

Document US 9466955B2 discloses a knife switch including an operator device for moving a contact knife between a first open position and a second position in electrical contact with a contact element. A free end of the contact knife is provided with a dynamic electric field control device including an electrically conductive element.

### Summary

The matter for protection is set out in the appended claims.

Disclosed herein is a switchgear, comprising a plurality of switching devices configured to disconnect a power supply from a load. Each switching device comprises: a plurality of poles, each pole associated with a respective switch having a fixed contact and a moveable contact, and an actuating mechanism comprising a shaft, the shaft configured to rotate to transfer an external input force to move the moveable contact and open or close the switches of the switching device. The plurality of switching devices are arranged along a first axis, and the plurality of poles of each switching device are arranged along a respective second axis perpendicular to the first axis. Each shaft is arranged perpendicular to the first axis and is configured to rotate around a rotational axis parallel to the second axes. By way of this depth-wise switchgear architecture, the width of the switchgear may be reduced. A more compact switchgear with a smaller footprint may therefore be provided.

In some examples, the switchgear further comprises a plurality of disconnector and earthing switches, each disconnector and earthing switch associated with a respective one of the plurality of poles, and each disconnector and earthing switch having a disconnector blade pivotable around a first end of the disconnector blade between three different positions. The three positions comprise: a first position in which the disconnector and earthing switch is closed and the power supply is connected to the load through the disconnector blade; a second, isolation, position in which the disconnector and earthing switch is open and the power supply is disconnected from the load; and a third position in which the power supply is disconnected from the load and a second end of the disconnector blade is electrically connected to an earthing contact. The earthing disconnection switch is a three-position disconnector and earthing switch, or 3PS.

When a three-position disconnector and earthing switch 3PS is provided in combination with the above-described switchgear architecture, a reliable device with a small footprint can be provided which can more easily tested in-situ (improve the ease of maintenance). In particular, the architecture can help allow a width of the switchgear product to be reduced, providing for a more compact switchgear whilst still allowing for provision of a three-position disconnector and earthing switch.

In some examples, the switchgear further comprises a housing having first and second side walls, wherein the switching devices are arranged along the first axis between the first and second side walls of housing.

Optionally, the first end of each disconnector blade is pivotably coupled to the respective switch, and wherein each disconnector blade is configured to rotate around the pivot from the first position to the second position, wherein the rotation is towards the second side wall of the housing.

In some examples, the second side wall comprises: an end insulator configured to contact, when the disconnector blades of the poles disposed proximate to the second side wall are in the second position, the second end of said disconnector blades; and/or an insulating sheet. In some examples, the second side wall comprises two shields, each shield comprising a metallic plate covered in an insulating material, wherein when the disconnector blades of the poles disposed proximate to the second side wall are in the second position, the second end of said disconnector blades is disposed between the two shields. The presence of insulating materials or sheets, even without physical contact, can act as an obstruction to help breakdown electrical current paths. This can help avoid dielectric failure, and may thereby improve dielectric performance.

In some examples, the switchgear further comprises a flexible link electrically connecting the first end of each disconnector blade and the moveable contact. This can facilitate movement of the disconnector blade. In some examples, each disconnector blade is operated by a four-bar crank rocker mechanism. Optionally, each disconnector and earthing switch is arranged between the respective switch and the shaft along a respective third axis perpendicular to the first and second axes.

In some examples, a plane in which disconnector blade rotates is offset from an operating axis of the respective switch. This offset can facilitate a greater degree of movement of the disconnector blade of the disconnector and earthing switch, which facilitates improved clearance between the first, second and third positions of the disconnector blade. Dielectric performance may therefore be improved.

In some example implementations, the switchgear further comprises a plurality of busbar assemblies, each busbar assembly comprising a plurality of main busbars and a plurality of branch busbars alternately arranged along the first axis, each main busbar extending parallel to the first axis to electrically connect corresponding poles of adjacent switching devices, wherein, when the disconnector blades are in the first position, the second end of each disconnector blade is electrically connected to a respective branch busbar, wherein each branch busbar is electrically coupled to a respective main busbar to provide a conduction path between adjacent switching devices.

Optionally, each branch busbar comprises a partially spherical end. This can help reduce end effects. Optionally, each of the plurality busbar assemblies is insulated at either end.

In some examples, each respective switch comprises a vacuum interrupter, wherein the moveable contact of the vacuum interrupter is moveable by the actuating mechanism and is arranged between the fixed contact of the vacuum interrupter and the shaft of the actuating mechanism.

In some examples, the switchgear is a three-way switchgear. The plurality of switching devices consist of: a first switching device; a second switching device; and a third switching device, wherein each of the first, second and third switching devices comprise three poles.

In some particular example implementations, the first switching device is a first load break switch LBS, the second switching device is a second load break switch LBS, and the third switching device is a vacuum circuit breaker VCB. The insulating material/sheets can be provided within the enclosure of the VCB, which can be formed in part by the second side wall of the housing. However, any other types and combinations of switches or switching devices can be used.

In some examples, the disconnector and earthing switch is a three-position switch, or 3PS. In some particular implementations, the 3PS is an off load 3PS switch. In some implementations, one off load three-position disconnector and earthing switch is in series with a vacuum circuit break VCB (an example implementation of a switching device) and two off load 3PS are in series with respective load break switches LBS (another example implementation of a switching device).

Optionally, the switchgear further comprises a plurality of disconnector and earthing switches, each disconnector and earthing switch associated with a respective one of the plurality of poles, and each disconnector and earthing switch having a disconnector blade pivotable around a first end of the disconnector blade between two or more different positions. The two or more positions comprise: a first position in which the disconnector and earthing switch is closed and the power supply is connected to the load through the disconnector blade; and a second position in which the power supply is disconnected from the load and a second end of the disconnector blade is electrically connected to an earthing contact. This can be implemented as a two-position earthing disconnection switch.

In some examples, the two or more positions further comprise a third, isolation, position in which the disconnector and earthing switch is open and the power supply is disconnected from the load. In some examples, the disconnector and earthing switch (also called an earthing disconnection switch) is a 3PS switch.

Also disclosed herein is a busbar assembly, comprising: a plurality of cylindrical main busbars, each comprising an inner hole extending through a length of the main busbar; a plurality of branch busbars, a first end of each branch busbar comprising a hole and a second end of each branch busbar comprising a spherical portion; and a threaded rod extending through the inner hole of each main busbar and the hole of each branch busbar. The threaded rod extends along a first direction between a first end and a second end. The plurality of main busbars and the plurality of branch busbars are alternately arranged on the threaded rod along the first direction. In some examples, each main busbar comprises an outer insulating sleeve colinear with the inner hole.

Also disclosed herein is a switchgear comprising the busbar assembly. The switchgear further comprises: a housing comprising first and second side walls offset along the first direction, the first side wall comprising a first insulating mount configured to threadably engage with the first end of the threaded rod and the second side wall comprising a second insulating mount configured to threadably engage with the second end of the threaded rod. In some examples, the first insulating mount is an insulating bush. In some examples, the second insulating mount is an epoxy insulator.

### List of Figures

The following description is with reference to the Figures.
Figure 1: Figure 1A shows a plan view of an existing switchgear architecture, and Figure 1B shows a plan view of a depth-wise switchgear architecture as described herein.
Figure 2: Figure 2A shows a perspective view of an example switchgear having a depth-wise architecture, and Figure 2B shows a side view of the switchgear of Figure 2A.
Figure 3: Figure 3A shows a front view of the switchgear of Figure 2A, and Figure 3B shows a detailed view of a pole of each of the switching devices of Figure 3A.
Figure 4 illustrates three positions of an example disconnector and earthing switch:
   Figure 4A shows a first, on, position; Figure 4B shows a second, off or isolation position; and Figure 4C shows a third, earth position.
   Figure 5: Figure 5A shows a side and perspective view of a switch of a pole and associated disconnector and earthing switch, and Figure 5B illustrates clearance between the disconnector blade and both a branch busbar and the earthing contact in the second position of Figure 4B.
   Figures 6A, 6B and 6C illustrate different insulating mechanisms.
   Figure 7 illustrates aspects of the busbar assembly: Figure 7A shows a perspective view of the busbar assembly; Figure 7B illustrates the busbar assembly in place within the switchgear; and Figure 7C shows a branch busbar.
   Figure 8 illustrates a top view of an example switchgear.

### Detailed description

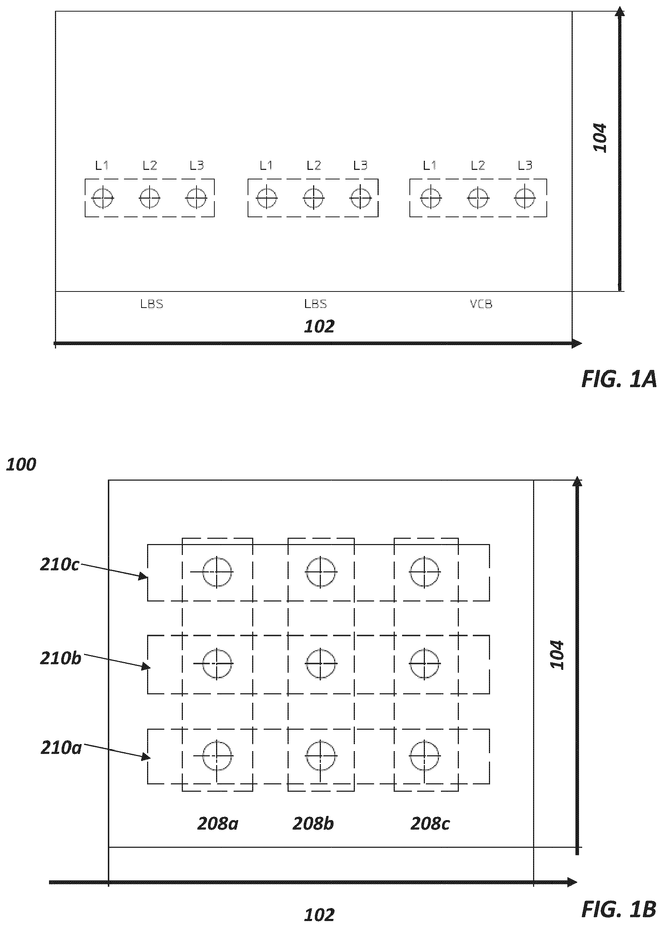

With reference to the schematic of Figure 1A, an existing switchgear architecture is shown in plan (top down) view. This example switchgear is a 3-way, 3-phase (or 3-pole) device with a two-position earthing disconnection switch (also termed a disconnector and earthing switch) having two positions (on, earth). The actual disconnector and earthing switch, or earthing disconnection switch, is not shown. The switchgear has multiple switching devices.

Each switching device of the switchgear (here the switchgear is shown with a combination of two load break switches LBS and one vacuum circuit breaker VCB) is arranged in a panel along a longitudinal direction 102 (or first axis 102), with the phases/poles (L1, L2, L3) for each switching device similarly arranged along the longitudinal direction. This arrangement is termed herein a "longitudinal" or "width wise" orientation. In one specific example of an existing switchgear, such a longitudinal/width wise architecture provides a width w (along the longitudinal direction 102) of 1100 mm, with a depth d (along a transverse direction 104 perpendicular to the longitudinal direction) of 600 mm. However, it will be understood that switchgears may have other dimensions and may include any suitable combination of switch types.

With reference to the schematic of Figure 1B, a new switchgear architecture in accordance with the present invention is shown in plan (top down) view. This example switchgear 100 is a 3-way, 3-phase (or 3-pole) device with a three-position earthing disconnection switch (also termed a disconnector and earthing switch) having three positions (on, off or isolation, earth). The actual earthing disconnection switch, or disconnector and earthing switch, is not shown.

Each switching device (here the switchgear is shown with a combination of two load break switches LBS and one vacuum circuit breaker VCB) is arranged in a panel along a longitudinal direction 102, but the phases/poles 210 (210a, 210b, 210c) for each switching device 208 (208a, 208b, 208c; in this particular example, LBS-208a, LBS-208b, VCB-208c) are arranged along the transverse direction 104 (the poles for each switch are arranged along a respective second axis 104). This arrangement is termed herein a "transverse" or "depth wise" orientation. In one specific example of the proposed switchgear, such a transverse/depth wise architecture provides a width w (along the longitudinal direction 102) of 900 mm, with a depth d (along a transverse direction 104 perpendicular to the longitudinal direction 102) of 780 mm. However, it will be understood that switchgears with this orientation may have other dimensions and may include any suitable combination of switch types. For example, any switchgear may be provided with a plurality of switching devices, each switching device having a plurality of poles, arranged in accordance with the architecture of Figure 1B.

In other words, the switchgear arrangement of Figure 1B can be generally implemented for any switchgear comprising a plurality of switching devices configured to disconnect a power supply from a load. Each switching device comprises a plurality of poles, each pole associated with a respective switch having a fixed contact and a moveable contact, and an actuating mechanism comprising a shaft. The shaft is configured to rotate to transfer an external input force to move the moveable contact and open or close the switches of the respective switching device. The plurality of switching devices are arranged along a first axis (102). The plurality of poles of each switching device are arranged along a respective second axis (104) perpendicular to the first axis. Each shaft is arranged perpendicular to the first axis and is configured to rotate around a rotational axis parallel to the second axes.

By way of the novel switchgear architecture illustrated in Figure 1B, the width of the switchgear product may be reduced, providing for a more compact switchgear whilst still allowing for provision of a three-position earthing disconnection switch (three-position disconnector and earthing switch). When a three-position disconnector and earthing switch is provided within the switchgear in combination with the above-described architecture, a reliable device with a small footprint can be provided which can more easily tested in-situ (improve the ease of maintenance).

The general switchgear architecture and its associated advantages will be discussed in more detail below with reference to example implementation details of the switchgear.

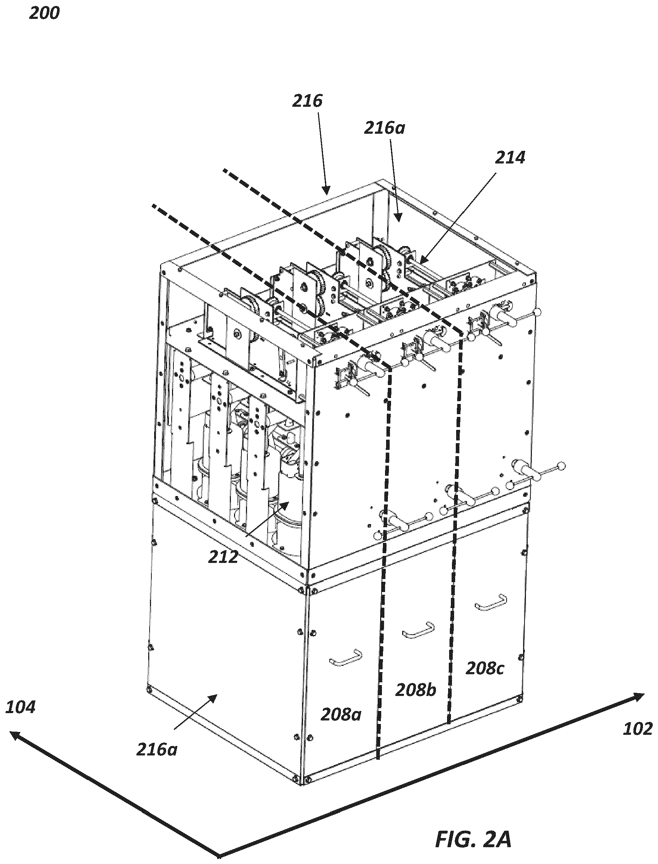

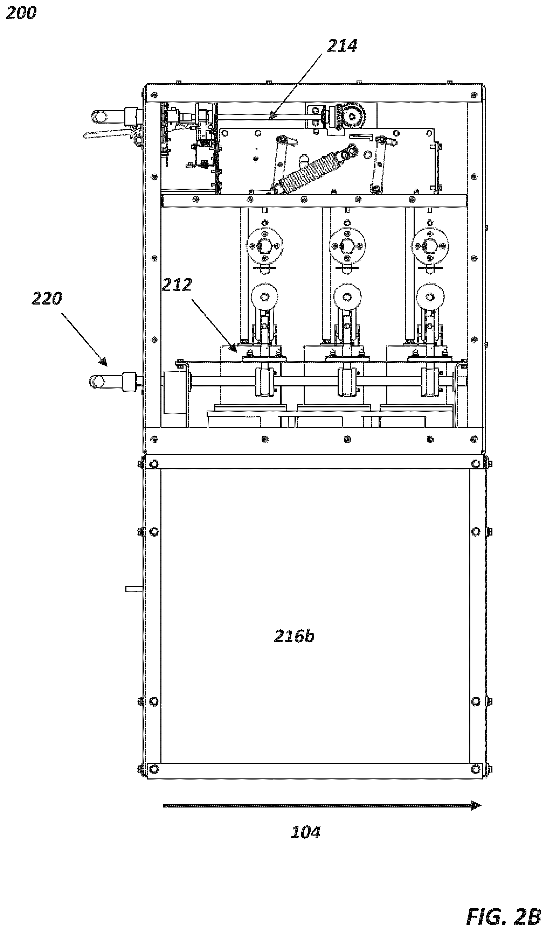

With reference to Figure 2A and 2B, a perspective view and side view of a switchgear 200 is shown. The example of Figure 2A, 2B is a three-way switchgear having three switching devices 208: a first switching device 208a, a second switching device 208b, and a third switching device 208c. In this particular example implementation, the switchgear has a combination of two load break switches LBS 208-a, 208-b and one vacuum circuit breaker VCB-208c with an offload 3PS (three position disconnector and earthing switch). However, the switchgear is not limited to this example implementation, and any suitable combination of switching devices and earthing disconnection switch can be used.

The switching devices are provided within a housing 216 and are schematically divided by the dashed lines in Figure 2A. Each of the first, second and third switching devices comprise three poles 210a, 210b, 210c arranged in a depth-wise or transverse direction 104 (as in Figure 1B).

Each of the plurality of poles 210 is associated with a respective switch 212 having a fixed contact and a moveable contact, and an actuating mechanism comprising a shaft 214. The shaft is configured to rotate to transfer an external input force from outside the housing 216 to move the moveable contact and open or close the switches of the poles 210 of the switching device 208. The switching devices 208 are arranged along a first axis (102), and the plurality of poles 210 of each switching device are arranged along a respective second axis (104) perpendicular to the first axis. Each shaft 214 is arranged perpendicular to the first axis and is configured to rotate around a rotational axis parallel to the second axes 104 in response to user engagement or user interaction. One shaft 214 drives all the poles 210 of one of the switching devices 208a.

The housing has a first side wall 216a (the portion of the first side wall enclosing the switching components is not shown) and a second side wall 216b. The switching devices 208 are arranged along the first axis 102 between the first and second side walls 216a, 216b of housing 216.

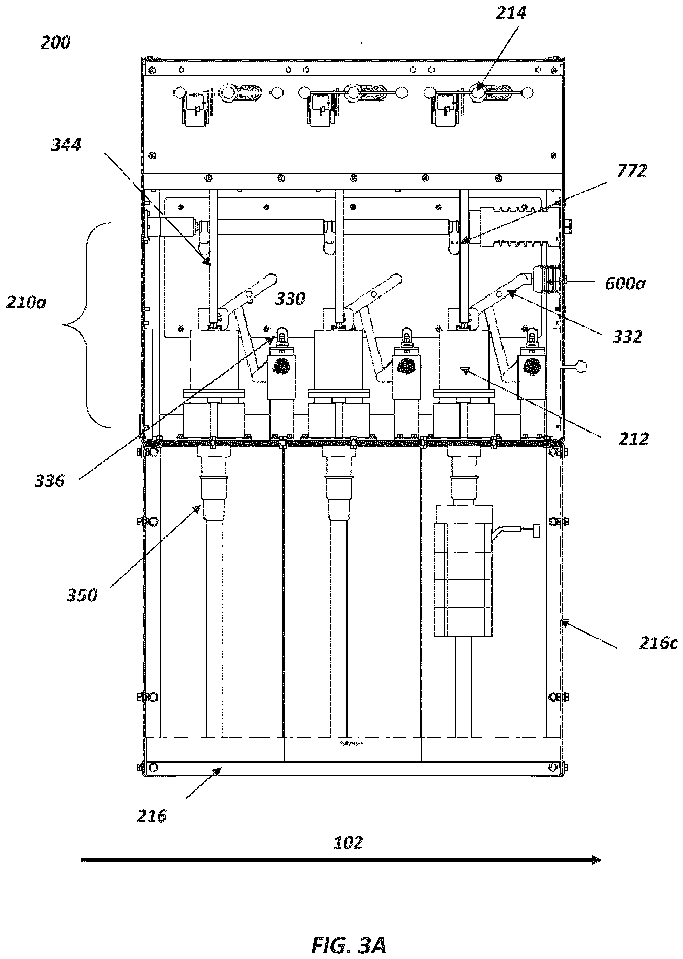

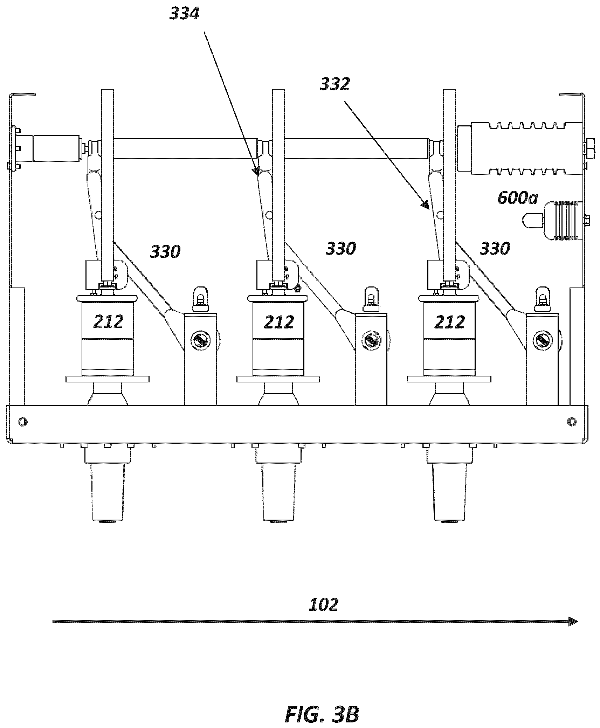

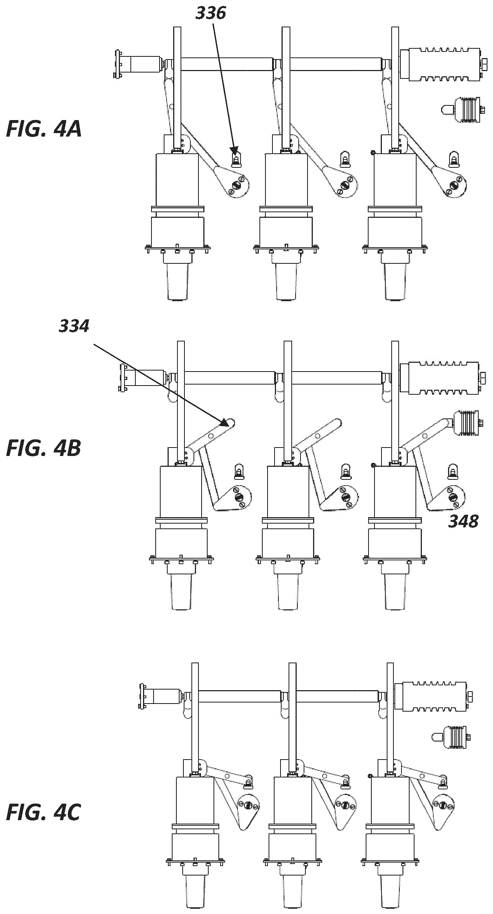

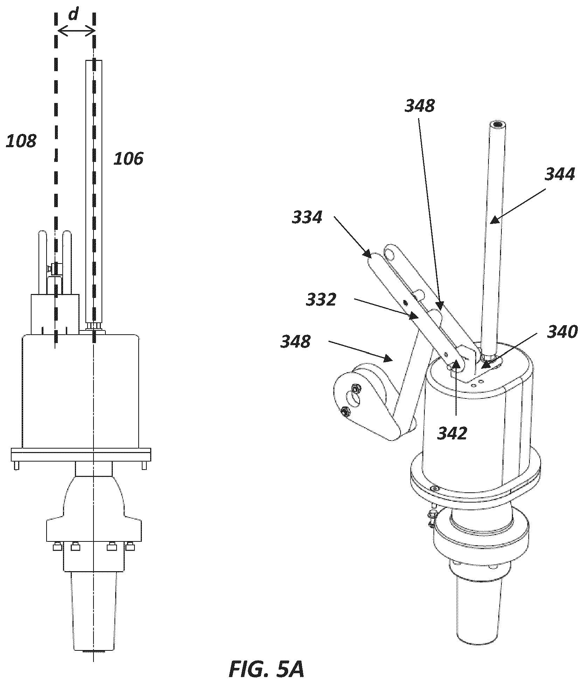

With further reference to Figure 3 (Figures 3A, 3B) and Figure 5A, a switchgear 200 (which is an example implementation of switchgear 100) also comprises a plurality of disconnector and earthing switches 330, each disconnector and earthing switch associated with a respective one of the plurality of poles 210. Each disconnector and earthing switch has a disconnector blade 332 which is pivotably connected, at a first end 342, to the associated switch. The disconnector blade is arranged to pivot at this first end between three different positions, as is further illustrated in Figure 4.

Each disconnector and earthing switch 330 is arranged between the respective switch 212 (formed of the moving and fixed contacts) and the shaft 214 along a respective third axis 106 perpendicular to the first and second axes (in series with the switch 212). The switch 212 is operated/actuated by a drive rod 344 which is connected to the shaft 214 to transfer the rotation of the shaft 214 in response to an external input force into movement of the moveable contact along the third axis 106, which is also referred to herein as the operating axis. The moveable contact is moveable by the drive rod 344 of the actuating mechanism and is arranged between the fixed contact and the shaft 214 of the actuating mechanism.

In some examples, the switch 212 is implemented as, or comprises, a vacuum interrupter (or VI). The VI can be implemented as part of a VCB or other circuit breaker, or as part of any other type of switching device (such as the LBS described above). The top contact of the vacuum interrupter VI is the moveable contact, moveable by the actuating mechanism is response to rotation of the shaft 214. With reference to Figure 3, the fixed contact of the vacuum interrupter VI is fixed to a bottom plate 216c of the housing 216 via a support plate (not shown). The bottom plate 216c and first and second sidewalls 216a, 216b at least partially define a switching compartment of the switchgear 100, 200. The switching compartment described herein is air insulated, however any other insulating medium which fulfils the required dielectric / thermal requirements (such as a vacuum, pressurised air, SF6 (sulphur hexafluoride) or other gaseous dielectric medium, or inert gas) may be provided within the switching compartment.

A housing of the VI covers the fixed and moving contacts and is bolted to the support plate. Column supports formed of an insulating material (not shown) can be bolted between the support plate and the bottom plate 216c to hold the support plate within the switching compartment of the housing 216. In this particular example, the VI is mounted on a bushing 350. The bushing 350 is bolted to the bottom plate 216c and is fixed to the support plate with epoxy.

The VI housing acts as a support for the hinge or pivot point at the first end 342 of the disconnector blade 332 (see e.g., Figure 3B). The first end of each disconnector blade is pivotably coupled to the respective switch 212. The first end of the disconnector blade 342 can be pivotably coupled to the switch between the moveable contact and the shaft 214. In this particular example, the first end of the disconnector blade 342 is pivotably coupled to a top of the VI housing which surrounds the fixed and moveable contacts of the switch.

A metallic shield (not shown) can be provided within the VI housing, placed between the moveable contact and the first end of the disconnector blade. The metallic shield acts to help shield the disconnector blade and the hinge/pivotable coupling from any electric field within the vacuum interrupter. As discussed above, the moving contact moves within the VI housing in response to actuation/rotation of the shaft 214. In particular, rotation of the shaft 214 actuates the drive rod 344 of the actuating mechanism, pulling the moveable contact along the operating axis towards the shaft 214 and opening the switch 212.

In the following example, the disconnector and earthing switch is described with reference to a 3PS disconnector and earthing switch. However, it will be understood that the switchgear architecture described can be implemented without any disconnector and earthing switch, or with any disconnector and earthing switch having two or more positions. With reference to Figures 3B and 4A, the disconnector blade 332 is arranged in a first position in which in which the 3PS disconnector and earthing switch is closed and the power supply is connected to the load through the disconnector blade (via a busbar, as discussed further below). This current path is shown further in Figure 3B. In this first position, current flows through the switchgear 200 via the fixed and moveable contacts and the disconnector blade. The switchgear 200 further comprises a flexible link 340 electrically connecting the first end 342 of each disconnector blade and the respective moveable contact. By using a flexible link 340, movement of the moving contact relative to the fixed hinge/pivot point of the disconnector blade 332 is facilitated, allowing actuating of the switch 212.

In response to user actuation of a direct break mechanism 220 (shown in Figure 2B), the disconnector blade is moved from the first position to a second position, which is shown in Figure 4B. The direct break mechanism 220 comprises a second shaft and a second actuating mechanism which is operated by rotation of the second shaft. A user can rotate the second shaft by turning or rotating an external handle, and the second actuating mechanism is rotated in response to rotation of the shaft. In this example, the second actuating mechanism is a four-bar crank rocker mechanism 348, but any suitable actuating/driving mechanism may be used. In particular, in response to rotation of the second shaft of the direct break mechanism 220, the disconnector blade is configured to rotate around the pivot from the first position to the second position, wherein the rotation is towards the second side wall 216b of the housing. In some examples, the second side wall forms part of the switching device 208c, which can be a vacuum circuit breaker, VCB. In other words, the second side wall can form part of the enclosure of the VCB.

The operation of the direct break mechanism 220 can be dependent on the particular combination of switching devices and disconnector and earthing switch. In this particular example, the disconnector and earthing switch is an off load 3PS arranged in series with the switch 212, which is implemented as part of a VCB (switching device). The 3PS can be operated only when the VCB is in open position, and interlocking mechanisms are provided accordingly. The 3PS direct break mechanism 220 will interlock with the VCB mechanism to ensure the switchgear is operated as per switchgear standard mechanical interlock requirements. An example operation is set out below:
1. VCB can be closed and opened (via shaft 214) only when 3PS is exactly in one of the on / off / earth positions.
2. If 3PS is in intermediate position (i.e., between the on / off /earth positions) the VCB cannot be opened or closed.
3. If the VCB is closed, the 3PS cannot be operated via the direct break mechanism 220.
4. If the VCB is open, then the 3PS can only be moved from one position to another adjacent position, i.e., on to off (first to second position), or off to earth (second to third position), and vice versa.
5. The 3PS cannot be moved directly from the on to earth or from the earth to on (i.e., between the first and the third position) in one operation. Instead, the operator or user has to move the 3PS from on to off in a first operation, and then from off to earth in a second operation via the direct break mechanism.

In the second position of Figure 4B, the 3PS disconnector and earthing switch is open and the power supply is disconnected from the load (the current path between the load and the power supply through the disconnector blade 332 is broken). This second, intermediate position is an isolation position in which the disconnector and earthing switch is "off" or isolated. The disconnector blade 332 can be moved into this off or isolation position without a corresponding actuation of the switches 212 of the switching devices 210 of the switchgear (i.e. independent of rotation of the shaft 214) - as discussed above, in some implementations (such as when the disconnector and earthing switch is an off load 3PS) this operation is dependent on the switching device (e.g. the VCB) being in an open state.

In response to further user actuation of the second shaft of the direct break mechanism 220 in the same direction of rotation, the disconnector blade is moved from the second position to a third position, which is shown in Figure 4C. In particular, the disconnector blade is configured to rotate around the pivot from the second position to the third position, wherein the rotation is again towards the second side wall 216b of the housing. In the third position, the power supply is disconnected from the load and a second end 334 of the disconnector blade is electrically connected to an earthing contact 336. The disconnector blade 332 can be moved into this earthed position without a corresponding actuation of the switches 212 of the switching devices 210 of the switchgear (i.e. independent of rotation of the shaft 214) - as discussed above, in some implementations (such as when the disconnector and earthing switch is an off load 3PS) this operation is dependent on the switching device (e.g. the VCB) being in an open state.

The disconnector and earthing switch 330 can thus be activated or controlled via mechanism 220 independently of the shaft 214 which controls or actuates the moving contact of the switches. In the example described above, the disconnector blade 332 is coupled to a fixed component (the housing of the VI) and is therefore decoupled from the actuation of the switch 212; in other words, actuation of the switchgear 100, 200 via shaft 214 does not actuate the disconnector and earthing switch 330. However, it will be understood that in other examples the second actuating mechanism (of the disconnector and earthing switch) can be configured such that, when the moving contact is opened by shaft 214 to disconnect the power supply from the load, the disconnector blade 332 of the disconnector and earthing switch is correspondingly moved to the third, earthed, position. In this way, the current path through each respective switch 212 of the switchgear 100, 200 is automatically opened in two different locations when the switch 212 is opened. In other examples, interlock mechanisms can prevent actuation of the direct break mechanism 220 if the switching device is open.

As can also be seen from Figure 5A, a plane (shown side on, labelled as 108) in which the disconnector blade 332 rotates is offset from this operating axis 106 of the respective switch by an offset, d. This offset allows a respective second actuating mechanism to be placed next to each switch 212 without interfering with actuation of the drive rod 344.

In some implementations, each disconnector and earthing switch comprises two or more disconnector blades. By using two disconnector blades, two parallel paths are created for current flow. This can help to improve thermal performance. In other examples, each disconnector and earthing switch comprises a single disconnector blade. When there are two blades, the offset, d, also allows a compression spring to be connected to and placed between the two blades. The compression spring acts to pull both disconnector blades inward toward one another. When the disconnector blade moves to the on or earth position and engages with the on or earth contacts, then the two blades can move outward around the contacts, either due to the size/shape of the contacts or repulsive forces generated during e.g., short circuit tests. The compression spring is arranged to generate an inward force that will help counter repulsive forces and pull the blades together so they remain in good electrical connection with the one and earth contacts. Electrical contact may therefore be improved.

Moreover, the offset can facilitate a greater degree of movement of the disconnector blade of the disconnector and earthing switch, which facilitates improved clearance between the first, second and third positions of the disconnector blade illustrated in Figure 4.

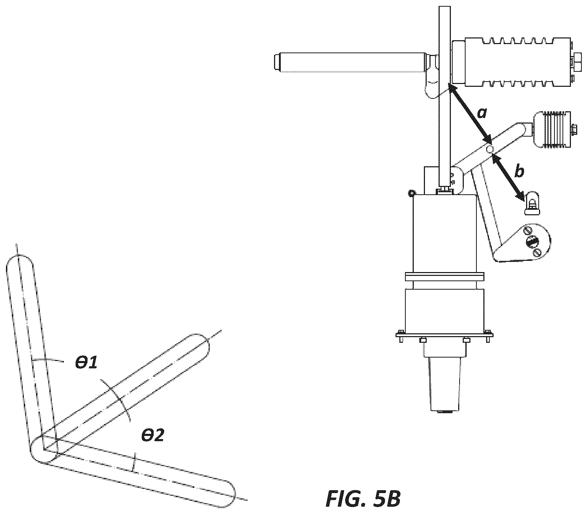

For example, as shown in Figure 5B, the offset allows the total degree of rotation of the disconnector blade of each switch 212 to be greater than 90 degrees. In some particular examples, theta_1 is between 50 and 80 degrees, optionally between 55 and 75 degrees, optionally between 60 and 70 degrees, optionally about 63 degrees. In some particular examples theta_2 is between 30 and 60 degrees, optionally between 35 and 55 degrees, optionally between 40 and 50 degrees, optionally about 48 degrees. In some particular examples, the clearance *a* between the first, "on", position and the second, "off" or isolation, position is between 90 and 140 mm, optionally between 100 and 130 mm, optionally between 110 and 120 mm, optionally about 113 mm. In some particular examples, the clearance b between the second, "off" or isolation, position and the third, earth, position is between 60 and 110 mm, optionally between 70 and 100 mm, optionally between 80 and 90 mm, optionally about 85 mm. However, it will be understood that the particular degrees of rotation theta_1, theta_2 and the particular clearances *a*, *b* will depend on the specific configuration and dimensions of the switchgear 100, 200.

Offsetting the plane of rotation of the disconnector blade 332 and the operating axis 106 thus facilitates use of a three-position disconnector and earthing switch 330 (or 3PS) within a compact switchgear 100, 200. A more compact, reliable switchgear may therefore be provided by use of the three-position disconnector and earthing switch 3PS provided herein.

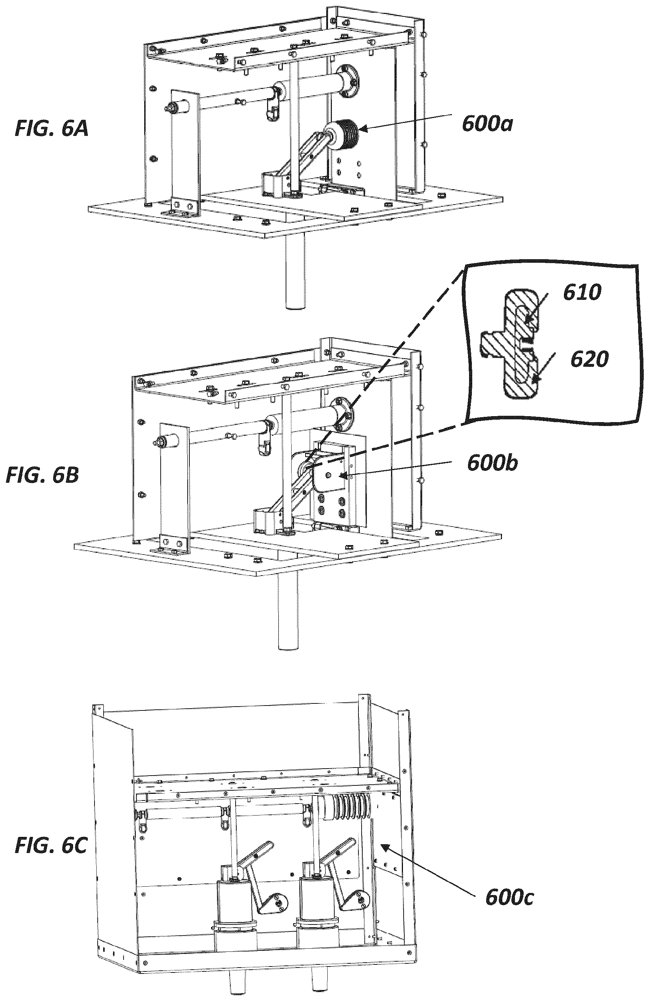

With reference to Figure 6 (Figures 6A, 6B, 6C), one or more insulating or isolating features may be provided to improve electrical safety during the isolation, second, position. These features may be provided individually, or in combination with one or more other insulating features (including features not described herein). It will be understood that the second end 334 of the disconnector blade 332 can be shaped to accommodate the insulating/isolating features described in Figure 6 whilst still allowing movement of the disconnector blade from the second position to the third, earthed, position of Figure 4C.

In one example, shown in Figure 6A, the second side wall 216a of the housing comprises an end insulator 600a. The end insulator is configured to contact, when the disconnector blades of the poles disposed proximate to the second side wall (e.g., the poles of the third switching device 208c) are in the second position, the second end 334 of said disconnector blades. In some examples, the end insulator (also called a support insulator as it supports the disconnector blade) comprises a copper portion which is in contact with the second end 334 of the disconnector blade 332. This end/support insulator 600a reduces field end effects at the second end 334 of the disconnector blade 332 and provides a dielectrically better performance compared to a high electric field in air.

In one example, shown in Figure 6B, the second side wall 216a of the housing comprises one or more shields 600b. In this example, there are two shields 600b, each shield comprising a metallic plate 610 covered in an insulating material 620. When the disconnector blades 332 of the poles disposed proximate to the second side wall (e.g., the poles of the third switching device 208c) are in the second position, the second end 334 of said disconnector blades is disposed between the two shields 600b. This shield 600b reduces field end effects at the second end 334 of the disconnector blade 332. Furthermore, the use of an insulating core means the high field is partly contained in the insulating material, which improves dielectric performance as compared to a high electric field in air.

In one example, shown in Figure 6C, the second side wall 216a of the housing comprises an insulating sheet 600c. The insulating sheet 600c can be formed from any suitable insulating material. The insulating sheet 600c need not contact the second end 334 of the disconnector blades of the poles disposed proximate to the second side wall (e.g., the poles of the third switching device 208c) are in the second position. The presence of the insulating sheet 600c, even without physical contact, acts as an obstruction to breakdown electrical current paths and can help avoid dielectric failure, thereby improving dielectric performance as compared to an equivalent switchgear with no insulating sheet 600c.

The use of one or more insulating features on the second side wall 216b of the housing facilitates use of a three-position disconnector and earthing switch 330 within a compact switchgear 100, 200. A more compact, reliable switchgear may therefore be provided by use of the insulating features provided herein.

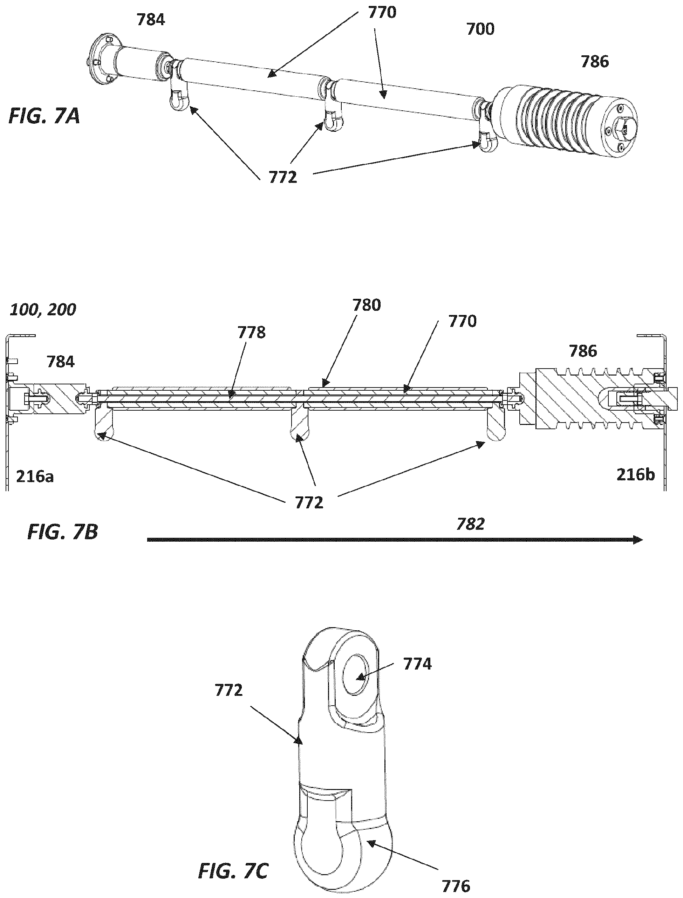

With reference to Figure 7 (Figures 7A, 7B, 7C), a busbar assembly 700 suitable for use with the switchgear 100, 200 is described.

The busbar assembly 700 comprises a plurality of cylindrical main busbars 770, each comprising an inner hole extending through a length of the main busbar. The busbar assembly also comprises a plurality of branch busbars 772. A first end of each branch busbar comprises a hole 774 and a second end of each branch busbar comprises a spherical portion 776. The use of a spherical (i.e., curved) portion at the second end of the branch busbar 772 acts to reduce or avoid high fields at the second end of the branch busbar. The second end of the disconnector blade contacts a corresponding branch busbar in the first, on, position to connect the power supply and the load.

A threaded rod 778 extends through the inner hole of each main busbar 770 and the hole 774 of each branch busbar 772. The branch busbars 772 are configured to electrically connect to respective disconnector blades in the first, on, position. The threaded rod extends along a first direction 782 between a first end and a second end. The plurality of main busbars and the plurality of branch busbars are alternately arranged on the threaded rod along the first direction 782. In some examples, each main busbar comprises an outer insulating sleeve 780 colinear with the inner hole.

With further reference to Figure 7B, a switchgear 100, 200 comprising the busbar assembly is described. As discussed above, the switchgear comprises a housing comprising first 216a and second 216b side walls offset along the first direction 782. The first side wall 216a comprises a first insulating mount 784 configured to threadably engage with the first end of the threaded rod 778. The second side wall 216b comprises a second insulating mount 786 configured to threadably engage with the second end of the threaded rod 778. In some examples, the first insulating mount 784 is an insulating bush. In some examples, the second insulating mount 786 is an epoxy insulator. However, other insulating mounts may be used, as required by the size and use/application of the switchgear.

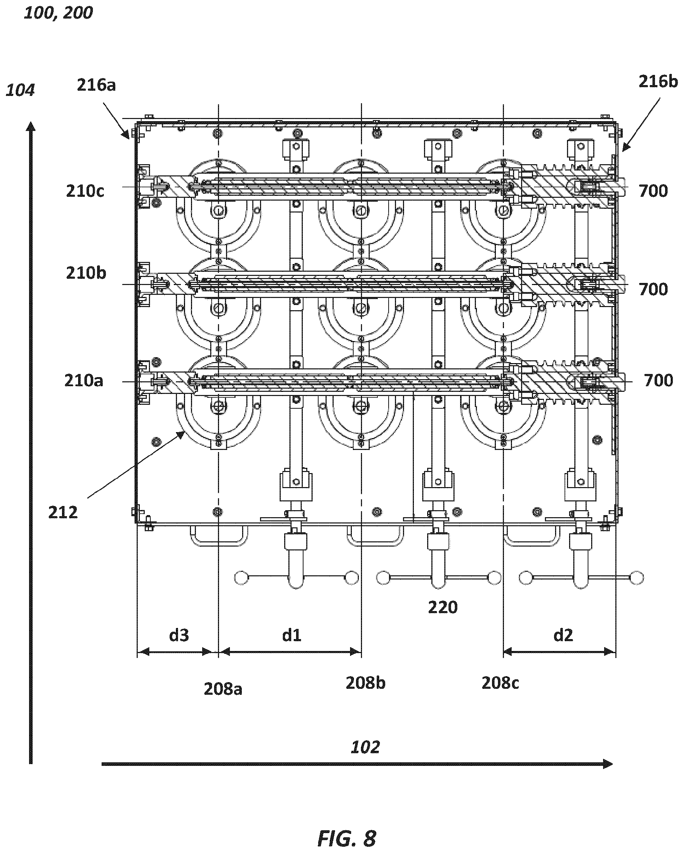

With reference to Figure 8, a plan view of a switchgear 100, 200 in accordance with the current disclosure and comprising a busbar assembly 700 is described. The example of Figure 8 is a three-way switchgear having three switching devices 208: a first switching device 208a, a second switching device 208b, and a third switching device 208c. The switching devices are provided between first 216a and second 216b side walls of the switchgear housing, arranged along a first axis 102.

In this particular example, a distance d1 between the first and second switching devices 208a, 208b is equal to a distance between the second and third switching devices 208b, 208c. However, to provide a compact footprint, a distance d2 between the third switching device and the second side wall 216b of the housing is less than d1. Moreover, a distance d3 between the first switching device and the first side wall 216a of the housing is less than d1 and less than d2. The dimension d2 is limited by the need to provide sufficient insulation/isolation during the second, "off" position of the 3PS disconnector and earthing switch 330. The insulating feature(s) described with reference to Figure 6 facilitate a smaller dimension d2, which helps provide a more compact switchgear.

In accordance with the above disclosure, each of the first, second and third switching devices comprise three poles 210a, 210b, 210c arranged in a depth-wise or transverse direction 104 (as in Figure 1B). In other words, the switching devices 208 are arranged along a first axis (102), and the plurality of poles 210 of each switching device are arranged along a respective second axis (104) perpendicular to the first axis. Each of the plurality of poles 210 is associated with a respective switch 212 having a fixed contact and a moveable contact. Each of the plurality of poles 210 is also associated with an disconnector and earthing switch 330, as discussed with reference to Figure 3.

A plurality of busbar assemblies 700 as described with reference to Figure 7 are arranged between the operating shaft 214 (not shown) and the switches 212. The busbar assemblies 700 are insulated at each end and coupled to the housing of the switchgear, as described with reference to Figure 7B. Each busbar assembly comprises a plurality of main busbars 770 and a plurality of branch busbars 772 alternately arranged along the first axis 102.

In this example, each busbar assembly 700 comprises two main busbars 770, each main busbar extending parallel to the first axis to electrically connect corresponding poles 210 of adjacent switching devices 208. For example, one main busbar connects pole 210a of switch/device 208a and pole 210a of switch/device 208b and another main busbar connects pole 210a of switch/device 208b and pole 210a of switch/device 208c. However, there may be one more than two main busbars per assembly.

In this example, there are three branch busbars per assembly (alternately arranged with the main busbars along the first axis). The busbar assemblies 700 are arranged such that, when the disconnector blades are in the first position, the second end 334 of each disconnector blade 332 is electrically connected to the second end of the respective branch busbar 772. The branch busbars can each have a partially spherical second end, as described with reference to Figure 7C, to reduce or avoid high fields at the end of the branch busbar. Each branch busbar is electrically coupled to the main busbars of the respective assembly to provide a conduction path between adjacent switching devices.

## Claims

1. A switchgear (100, 200), comprising:
a plurality of switching devices (208) configured to disconnect a power supply from a load, each switching device comprising:
a plurality of poles (210), each pole associated with a respective switch (212) having a fixed contact and a moveable contact, and
an actuating mechanism comprising a shaft (214), the shaft configured to rotate to transfer an external input force to move the moveable contact and open or close the switches of the switching device;
wherein:
the plurality of switching devices are arranged along a first axis (102),
the plurality of poles of each switching device are arranged along a respective second axis (104) perpendicular to the first axis, and
each shaft is arranged perpendicular to the first axis and is configured to rotate around a rotational axis parallel to the second axes; and
a plurality of disconnector and earthing switches (330), each disconnector and earthing switch associated with a respective one of the plurality of poles, and each disconnector and earthing switch having a disconnector blade (332) pivotable around a first end (342) of the disconnector blade between three different positions, the three positions comprising:
a first position in which the disconnector and earthing switch is closed and the power supply is connected to the load through the disconnector blade;
a second, isolation, position in which the disconnector and earthing switch is open and the power supply is disconnected from the load; and
a third position in which the power supply is disconnected from the load and a second end (334) of the disconnector blade is electrically connected to an
earthing contact (336), **characterised in that** the first end of the disconnector blade is pivotably coupled to the respective switch.

2. The switchgear of claim 1, further comprising a housing (216) having first (216a) and second (216b) side walls,
wherein the switching devices are arranged along the first axis between the first and second side walls of housing.

3. The switchgear of claim 2, wherein the first end of each disconnector blade is pivotably coupled to the respective switch,
and wherein each disconnector blade is configured to rotate around the pivot from the first position to the second position, wherein the rotation is towards the second side wall of the housing.

4. The switchgear of claim 3, wherein the second side wall comprises:
an end insulator (600a) configured to contact, when the disconnector blades of the poles disposed proximate to the second side wall are in the second position, the second end of said disconnector blades; and/or
an insulating sheet (600c).

5. The switchgear of claim 3, wherein the second side wall comprises two shields (600b), each shield comprising a metallic plate (610) covered in an insulating material (620), wherein when the disconnector blades of the poles disposed proximate to the second side wall are in the second position, the second end of said disconnector blades is disposed between the two shields.

6. The switchgear of any of claims 1 to 5, further comprising a flexible link (340) electrically connecting the first end of each disconnector blade and the moveable contact.

7. The switchgear of claim 6, wherein each disconnector and earthing switch is arranged between the respective switch and the shaft along a respective third axis (106) perpendicular to the first and second axes.

8. The switchgear of any of claims 1 to 7, wherein each disconnector blade is operated by a four-bar crank rocker mechanism (348).

9. The switchgear of any of claims 1 to 8, wherein a plane (108) in which disconnector blade rotates is offset from an operating axis of the respective switch.

10. The switchgear of any of claims 1 to 9, further comprising a plurality of busbar assemblies (700), each busbar assembly comprising a plurality of main busbars (770) and a plurality of branch busbars (772) alternately arranged along the first axis,
each main busbar extending parallel to the first axis to electrically connect corresponding poles of adjacent switching devices,
wherein, when the disconnector blades are in the first position, the second end of each disconnector blade is electrically connected to a respective branch busbar,
wherein each branch busbar is electrically coupled to a respective main busbar to provide a conduction path between adjacent switching devices.

11. The switchgear of claim 10, wherein each branch busbar comprises a partially spherical end.

12. The switchgear of claims 10 or 11, wherein each of the plurality busbar assemblies is insulated at either end.

13. The switchgear of any preceding claim, wherein each respective switch comprises a vacuum interrupter, wherein the moveable contact of the vacuum interrupter is moveable by the actuating mechanism and is arranged between the fixed contact of the vacuum interrupter and the shaft of the actuating mechanism.

14. The switchgear of any preceding claim, wherein the switchgear is a three-way switchgear, the plurality of switching devices consisting of:
a first switching device (208a);
a second switching device (208b); and
a third switching device (208c),
wherein each of the first, second and third switching devices comprise three poles.

## Patentansprüche

1. Schaltanlage (100, 200), umfassend:
eine Vielzahl von Schaltvorrichtungen (208), konfiguriert, um eine Stromversorgung von einer Last zu trennen, wobei jede Schaltvorrichtung umfasst:
eine Vielzahl von Polen (210), wobei jeder Pol mit einem jeweiligen Schalter (212) verbunden ist, der einen festen Kontakt und einen beweglichen Kontakt aufweist, und
einen Betätigungsmechanismus, der eine Welle (214) umfasst, wobei die Welle so konfiguriert ist, dass sie sich dreht, um eine externe Eingabekraft zu übertragen, um den beweglichen Kontakt zu bewegen und die Schalter der Schaltvorrichtung zu öffnen oder zu schließen;
wobei:
die Vielzahl der Schaltvorrichtungen entlang einer ersten Achse (102) angeordnet ist,
die Vielzahl der Pole jeder Schaltvorrichtung entlang einer jeweiligen zweiten Achse (104) angeordnet ist, die senkrecht zur ersten Achse verläuft, und
jede Welle senkrecht zur ersten Achse angeordnet ist und zur Drehung um eine zu den zweiten Achsen parallele Drehachse konfiguriert ist; und
eine Vielzahl von Trenn- und Erdungsschaltern (330), wobei jeder Trenn- und Erdungsschalter mit einem entsprechenden der Vielzahl von Polen verbunden ist und jeder Trenn- und Erdungsschalter ein Trennblatt (332) aufweist, die um ein erstes Ende (342) des Trennblattes zwischen drei verschiedenen Positionen schwenkbar ist, wobei die drei Positionen Folgendes umfassen:
eine erste Position, in der der Trenn- und Erdungsschalter geschlossen ist und die Stromversorgung über das Trennblatt mit der Last verbunden ist;
eine zweite, isolierte Position, in der der Trenn- und Erdungsschalter geöffnet ist und die Stromversorgung von der Last getrennt ist; und
eine dritte Position, in der die Stromversorgung von der Last getrennt ist und ein zweites Ende (334) des Trennblattes elektrisch mit einem Erdungskontakt (336) verbunden ist, **dadurch gekennzeichnet, dass** das erste Ende des Trennblattes schwenkbar mit dem jeweiligen Schalter gekoppelt ist.

2. Schaltanlage nach Anspruch 1, ferner umfassend ein Gehäuse (216), das eine erste (216a) und eine zweite (216b) Seitenwand aufweist,
wobei die Schaltvorrichtungen entlang der ersten Achse zwischen der ersten und zweiten Seitenwand des Gehäuses angeordnet sind.

3. Schaltanlage nach Anspruch 2, wobei das erste jedes Trennblattes schwenkbar mit dem jeweiligen Schalter gekoppelt ist,
und wobei jedes Trennblatt so konfiguriert ist, dass sie sich um den Drehpunkt von der ersten Position zur zweiten Position dreht, wobei die Drehung in Richtung der zweiten Seitenwand des Gehäuses erfolgt.

4. Schaltanlage nach Anspruch 3, wobei die zweite Seitenwand Folgendes umfasst:
einen Endisolator (600a), der so konfiguriert ist, dass er mit dem zweiten Ende der Trennblätter in Kontakt kommt, wenn die Trennblätter der Pole, die in der Nähe der zweiten Seitenwand angeordnet sind, sich in der zweiten Position befinden; und/oder
eine Isolierlage (600c).

5. Schaltanlage nach Anspruch 3, wobei die zweite Seitenwand zwei Abschirmungen (600b) umfasst, wobei jede Abschirmung eine Metallplatte (610) umfasst, die mit einem isolierenden Material (620) bedeckt ist, wobei, wenn die Trennblätter der in der Nähe der zweiten Seitenwand angeordneten Pole in der zweiten Position sind, das zweite Ende der Trennblätter zwischen den beiden Abschirmungen angeordnet ist.

6. Schaltanlage nach einem der Ansprüche 1 bis 5, ferner umfassend eine flexible Verbindung (340), die das erste Ende jedes Trennblattes und den beweglichen Kontakt elektrisch miteinander verbindet.

7. Schaltanlage nach Anspruch 6, wobei jeder Trenn- und Erdungsschalter zwischen dem jeweiligen Schalter und der Welle entlang einer jeweiligen dritten Achse (106) angeordnet ist, die senkrecht zur ersten und zweiten Achse verläuft.

8. Schaltanlage nach einem der Ansprüche 1 bis 7, wobei jedes Trennblatt durch einen viergliedrigen Kurbelwippmechanismus (348) betrieben wird.

9. Schaltanlage nach einem der Ansprüche 1 bis 8, wobei eine Ebene (108), in der sich das Trennblatt dreht, von einer Betriebsachse des jeweiligen Schalters versetzt ist.

10. Schaltanlage nach einem der Ansprüche 1 bis 9, ferner umfassend eine Vielzahl von Sammelschienenanordnungen (700), wobei jede Sammelschienenanordnung eine Vielzahl von Hauptsammelschienen (770) und eine Vielzahl von Zweigsammelschienen (772) umfasst, die abwechselnd entlang der ersten Achse angeordnet sind,
wobei sich jede Hauptsammelschiene parallel zur ersten Achse erstreckt, um entsprechende Pole von benachbarten Schaltvorrichtungen elektrisch zu verbinden,
wobei, wenn sich die Trennblätter in der ersten Position befinden, das zweite Ende jedes Trennblattes elektrisch mit einer jeweiligen Zweigsammelschiene verbunden ist,
wobei jede Zweigsammelschiene elektrisch mit einer entsprechenden Hauptsammelschiene gekoppelt ist, um einen Leitungspfad zwischen benachbarten Schaltvorrichtungen bereitzustellen.

11. Schaltanlage nach Anspruch 10, wobei jede Zweigsammelschiene ein teilweise kugelförmiges Ende umfasst.

12. Schaltanlage nach Anspruch 10 oder 11, wobei jede der Vielzahl von Sammelschienenanordnungen an beiden Enden isoliert ist.

13. Schaltanlage nach einem der vorstehenden Ansprüche, wobei jeder jeweilige Schalter einen Vakuumschalter umfasst, wobei der bewegliche Kontakt des Vakuumschalters durch den Betätigungsmechanismus bewegt werden kann und zwischen dem festen Kontakt des Vakuumschalters und der Welle des Betätigungsmechanismus angeordnet ist.

14. Schaltanlage nach einem der vorstehenden Ansprüche, wobei es sich bei der Schaltanlage um eine Drei-Wege-Schaltanlage handelt und die Vielzahl der Schaltvorrichtungen aus folgenden Elementen besteht:
eine erste Schaltvorrichtung (208a);
eine zweite Schaltvorrichtung (208b); und
eine dritte Schaltvorrichtung (208c),
wobei jede der ersten, zweiten und dritten Schaltvorrichtung drei Pole umfasst.

## Revendications

1. Appareillage électrique (100, 200) comprenant :
une pluralité de dispositifs de commutation (208) configurés pour déconnecter une alimentation électrique d'une charge, chaque dispositif de commutation comprenant :
une pluralité de pôles (210), chaque pôle associé à un commutateur (212) respectif ayant un contact fixe et un contact mobile, et
un mécanisme d'actionnement comprenant un arbre (214), l'arbre étant configuré pour tourner afin de transférer une force d'entrée externe pour déplacer le contact mobile et ouvrir ou fermer les commutateurs du dispositif de commutation ;
dans lequel :
la pluralité de dispositifs de commutation sont agencés le long d'un premier axe (102),
la pluralité de pôles de chaque dispositif de commutation sont agencés le long d'un deuxième axe (104) respectif perpendiculaire au premier axe, et
chaque arbre est agencé perpendiculairement au premier axe et est configuré pour tourner autour d'un axe de rotation parallèle au deuxième axe ; et
une pluralité de sectionneurs et de commutateurs de mise à la terre (330), chaque sectionneur et commutateur de mise à la terre étant associé à un pôle respectif de la pluralité de pôles, et chaque sectionneur et commutateur de mise à la terre ayant une lame de sectionneur (332) pouvant pivoter autour d'une première extrémité (342) de la lame de sectionneur entre trois positions différentes, les trois positions comprenant :
une première position dans laquelle le sectionneur et commutateur de mise à la terre est fermé et l'alimentation électrique est connectée à la charge par l'intermédiaire de la lame de sectionneur ;
une deuxième position d'isolement dans laquelle le sectionneur et commutateur de mise à la terre est ouvert et l'alimentation électrique est déconnectée de la charge ; et
une troisième position dans laquelle l'alimentation électrique est déconnectée de la charge et une seconde extrémité (334) de la lame de sectionneur est connectée électriquement à un contact de mise à la terre (336), **caractérisé en ce que** la première extrémité de la lame de sectionneur est couplée de manière pivotante au commutateur respectif.

2. Appareillage électrique selon la revendication 1, comprenant en outre un boîtier (216) ayant des première (216a) et seconde (216b) parois latérales,
dans lequel les dispositifs de commutation sont agencés le long du premier axe entre les première et seconde parois latérales du boîtier.

3. Appareillage électrique selon la revendication 2, dans lequel la première extrémité de chaque lame de sectionneur est couplée de manière pivotante au commutateur respectif,
et dans lequel chaque lame de sectionneur est configuré pour tourner autour du pivot de la première position à la deuxième position, dans lequel la rotation s'effectue en direction de la seconde paroi latérale du boîtier.

4. Appareillage électrique selon la revendication 3, dans lequel la seconde paroi latérale comprend :
un isolateur d'extrémité (600a) configuré pour entrer en contact avec la seconde extrémité desdites lames de sectionneur lorsque les lames de sectionneur des pôles disposés à proximité de la seconde paroi latérale sont dans la deuxième position ; et/ou
une feuille isolante (600c).

5. Appareillage électrique selon la revendication 3, dans lequel la seconde paroi latérale comprend deux boucliers (600b), chaque bouclier comprenant une plaque métallique (610) recouverte d'un matériau isolant (620), dans lequel, lorsque les lames de sectionneur des pôles disposés à proximité de la seconde paroi latérale sont dans la deuxième position, la seconde extrémité desdites lames de sectionneur est disposée entre les deux boucliers.

6. Appareillage électrique selon l'une quelconque des revendications 1 à 5, comprenant en outre une liaison souple (340) reliant électriquement la première extrémité de chaque lame de sectionneur et le contact mobile.

7. Appareillage électrique selon la revendication 6, dans lequel chaque sectionneur et commutateur de mise à la terre est agencé entre le commutateur respectif et l'arbre le long d'un troisième axe respectif (106) perpendiculaire aux premier et deuxième axes.

8. Appareillage électrique selon l'une quelconque des revendications 1 à 7, dans lequel chaque lame de sectionneur est amenée à fonctionner par un mécanisme de bascule à manivelle à quatre barres (348).

9. Appareillage électrique selon l'une quelconque des revendications 1 à 8, dans lequel un plan (108) dans lequel la lame de sectionneur tourne est décalé par rapport à un axe de fonctionnement du commutateur respectif.

10. Appareillage électrique selon l'une quelconque des revendications 1 à 9 comprenant en outre une pluralité d'ensembles de barres omnibus (700), chaque ensemble de barres omnibus comprenant une pluralité de barres omnibus principales (770) et une pluralité de barres omnibus de dérivation (772) agencées alternativement le long du premier axe,
chaque barre omnibus principale s'étendant parallèlement au premier axe pour connecter électriquement des pôles correspondants de dispositifs de commutation adjacents,
dans lequel, lorsque les lames de sectionneur sont dans la première position, la seconde extrémité de chaque lame de sectionneur est connectée électriquement à une barre omnibus de dérivation respective,
dans lequel chaque barre omnibus de dérivation est couplée électriquement à une barre omnibus principale respective pour fournir un chemin de conduction entre les dispositifs de commutation adjacents.

11. Appareillage électrique selon la revendication 10, dans lequel chaque barre omnibus de dérivation comprend une extrémité partiellement sphérique.

12. Appareillage électrique selon les revendications 10 ou 11, dans lequel chaque ensemble de barres omnibus est isolé à l'une de ses extrémités.

13. Appareillage électrique selon une quelconque revendication précédente, dans lequel chaque commutateur respectif comprend un commutateur à vide, dans lequel le contact mobile du commutateur à vide est déplaçable par le mécanisme d'actionnement et est agencé entre le contact fixe du commutateur à vide et l'arbre du mécanisme d'actionnement.

14. Appareillage électrique selon l'une quelconque revendication précédente, dans lequel l'appareillage électrique est un appareillage électrique à trois voies, la pluralité de dispositifs de commutation étant constituée de :
un premier dispositif de commutation (208a) ;
un deuxième dispositif de commutation (208b) ; et
un troisième dispositif de commutation (208c),
dans lequel chacun des premier, deuxième et troisième dispositifs de commutation comporte trois pôles.
